# EUROPÄISCHE PATENTSCHRIFT

(11) **EP 0 670 822 B1**
(45) Veröffentlichungstag und Bekanntmachung des Hinweises auf die Patenterteilung: **26.03.1997**
(21) Anmeldenummer: 94925303.3
(22) Anmeldetag: 05.09.1994
(51) Int. Cl.: C05F 17/02

(54) **BELÜFTETER KOMPOSTER**
VENTILATED COMPOSTER
COMPOSTEUR AERE

(30) Priorität: 03.09.1993 AT 1780/93
(43) Veröffentlichungstag der Anmeldung: 13.09.1995
(73) Patentinhaber: Wüster, Heinrich, A-6460 Imst (AT)
(72) Erfinder: Wüster, Heinrich, A-6460 Imst (AT)
(74) Vertreter: Berger, Erhard, Dr.
(86) Internationale Anmeldenummer: AT9400124
(87) Internationale Veröffentlichungsnummer: WO9506624

(56) Entgegenhaltungen:
- EP-A- 0 538 579
- WO-A-92/04303

## Beschreibung

Die Erfindung betrifft Vorrichtungen zur Herstellung von Kompost, insbesonders zum Kompostieren von Garten- und Küchenabfällen.

Bekannte Vorrichtungen dieser Art bestehen meist aus einschaligen Behältern mit im wesentlichen zylindrischem oder quadratischem Querschnitt, in deren Behälterwänden Durchbrüche vorgesehen sind, durch die Sauerstoff dem zu kompostierenden Gut zugeführt und gleichzeitig der beim Kompostiervorgang entstehende Wasserdampf abgeführt werden soll, um Fäulnisbildung und unangenehme Gerüche zu vermeiden. Dies ist zumeist nur sehr unvollkommen möglich, weil die zu kompostierenden Abfälle verklumpen und an der Innenseite der Behälterwände so eng anliegen, daß die notwendige Durchlüftung unmöglich wird.

Aus der DE 30 19 253 A1 ist eine zweischalige Kompostiervorrichtung mit einem geschlossenen, mit nach innen weisenden dünnen vertikalen Stegen versehenen, zylinderförmigen Außenmantel und mit einem vom Außenmantel im Abstand von 2 bis 5 cm angeordneten, als Drahtgitter ausgebildeten zylindrischen Innenmantel bekannt, bei welcher die am oberen Ende der beiden Mäntel vorgesehene Einfüllöffnung für das zu kompostierende Gut mit einer flexiblen Abdeckfolie abgedeckt ist und die Entnahme des Kompostes erst nach Entfernen der beiden Mäntel möglich ist.

Aus der DE 41 28 189 C1 ist weiters eine Vorrichtung zur Herstellung von Kompost mit einem im wesentlichen pyramidenförmigen an der Oberseite entlüftbaren Behälter bekannt, welcher eine obere, durch einen Deckel verschließbare Einfüllöffnung für das zu kompostierende Gut, eine untere, durch eine Klappe verschließbare Entnahmeöffnung für den Kompost und mehrere untere, die Behälterwand durchsetzende Belüftungsöffnungen aufweist. Auf der Innenseite der Behälterwand sind durch, von dieser nach innen vorstehende, dünne, vertikale Stege seitlich begrenzte, zum Behälterinneren offene, breite vertikale und vertikal ineinandermündende Strömungskanäle für die durch die Belüftungsöffnungen eintretende und an der Innenseite der Behälterwand entlangstreichenden Luft vorgesehen.

Bei diesen bekannten Kompostiervorrichtungen wird mit Hilfe der vertikalen Strömungskanäle nur eine geringfügige Verbesserung der Kompostierungsverhältnisse erreicht, weil zufolge der, während des Kompostierungsprozesses im Kompostierungsgut entstehenden Wärme und zufolge der, von der Behälterwand aufgenommenen Sonnenwärme in den vertikalen Strömungskanälen eine intensive, nach oben gerichtete Luftströmung mit relativ hoher Strömungsgeschwindigkeit entsteht, die die durch die unteren Belüftungsöffnungen einströmende Luft relativ rasch am zu kompostierenden Gut vorbei zur oberen Entlüftung des Behälters führt. Dadurch wird dem Kompostierungsprozeß laufend die für seinen ordnungsgemäßen Ablauf unbedingt erforderliche Wärme entzogen. Um während des Kompostierens Unkrautsamen zu vernichten, wird empfohlen, während beim Kompostierungsprozeß zumindest eine Temperatur von 60 Grad C zu erreichen. Die intensive Luftströmung an den Randbereichen des zu kompostierenden Gutes führt auch zu einer Austrocknung des zu kompostierenden Gutes. Es hat sich gezeigt, daß eine intensive Luftzirkulation den Kompostierungsprozeß auch bei für Mitteleuropa normalen Außentemperaturen stark verzögert und bei kühler Witterung völlig zum Erliegen bringt.

Aufgabe der Erfindung ist es, diese Nachteile zu beseitigen und eine Kompostiervorrichtung anzugeben, bei der die Belüftung trotz der notwendigen Sauerstoffzufuhr eine Abkühlung und Austrocknung des zu kompostierenden Gutes möglichst vermeidet.

Dies wird bei einer Vorrichtung zur Herstellung von Kompost mit einem, vorzugsweise sich nach oben verjüngenden, an seiner Oberseite entlüftbaren Behälter mit einer oberen, vorzugsweise durch einen Deckel verschließbaren Einfüllöffnung für das zu kompostierende Gut, einer unteren, vorzugsweise durch eine Klappe verschließbaren Entnahmeöffnung für den Kompost, mehreren unteren, die Behälterwand durchsetzenden Belüftungsöffnungen sowie mit mehreren, an der Innenseite der Behälterwand angeordneten Luftleitelementen für die durch die Belüftungsöffnungen eintretende und an der Innenseite der Behälterwand entlangstreichende Zuluft erfindungsgemäß dadurch gelöst, daß an der Innenseite der Behälterwand ein von den Luftleitelementen gebildetes, die Luftströmung entlang der Behälterwand bremsendes Strömungslabyrinth vorgesehen ist.

Durch diese Ausbildung wird eine sehr geringe Strömungsgeschwindigkeit der durch die Belüftungsöffnungen eintretenden Zuluft entlang der Innenseite der Behälterwand verbunden mit einer intensiven Umspülung des zu kompostierenden Gutes erreicht, wodurch die durch den Behälter strömende Luftmenge sowohl für die Abgabe von Sauerstoff an das zu kompostierende Gut als auch für die Aufnahme von Wasserdampf aus dem zu kompostierenden Gut intensiver genutzt wird, sodaß für die ordnungsgemäße Kompostierung nur mehr eine viel geringere den Behälter durchströmende Luftmenge erfoderlich ist. Gleichzeitig wird durch die Verringerung der Strömungsgeschwindigkeit der Luft und durch die Verringerung der benötigten Luftmenge auch der Wärmeabtransport aus dem zu kompostierenden Gut durch die den Behälter durchströmende Luft verringert. Darüberhinaus stellen die das Strömungslabyrinth bildenden Luftleitelemente Abstandshalter für das zu kompostierende Gut dar, wodurch die auf der Innenseite mit dem erfindungsgemäßen Strömungslabyrinth versehene Behälterwand eine gute thermische Isolierung erhält.

Gemäß einem weiteren Merkmal der Erfindung kann vorgesehen sein, daß die Luftleitelemente in übereinanderliegenden Reihen angeordnet sind, wobei jeweils oberhalb eines, zwischen zwei einander benachbarten Luftleitelementen einer Reihe ausgebildeten kurzen Strömungskanales ein Luftleitelement der nächsten Reihe als Prallkörper angeordnet ist.

Gemäß einem weiteren Merkmal der Erfindung kann vorgesehen sein, daß von der Innenseite der Behälterwand ins Innere des Behälters vorspringende Erhebungen und/oder an der Innenseite der Behälterwand anliegende Strömungskörper als das Strömungslabyrinth bildende Luftleitelemente vorgesehen sind. Diese Ausbildung ermöglicht neben der einschaligen Ausbildung der Behälterwände auch eine zweischalige Ausbildung der Behälterwände. Eine zweischalige Ausbildung der Behälterwände kann beispielsweise eine Außenschale mit einer glatten Innenwand und eine an dieser anliegende, die das Strömungslabyrinth bildenden Strömungskörper enthaltende, dünnwandige Innenschale umfassen, welche über Klebe- oder Schnappverbindungen mit der Außenschale verbunden ist.

Gemäß einem weiteren Merkmal der Erfindung kann vorgesehen sein, daß die Luftleitelemente als in schrägen und/oder horizontalen Reihen angeordnete kurze längliche Rippen ausgebildet sind.

Gemäß einem weiteren Merkmal der Erfindung kann vorgesehen sein, daß die von der Innenseite der Behälterwand ins Innere des Behälters vorspringenden Erhebungen mit die sie begrenzenden Strömungskanäle zumindest teilweise überdachenden Rändern versehen sind.

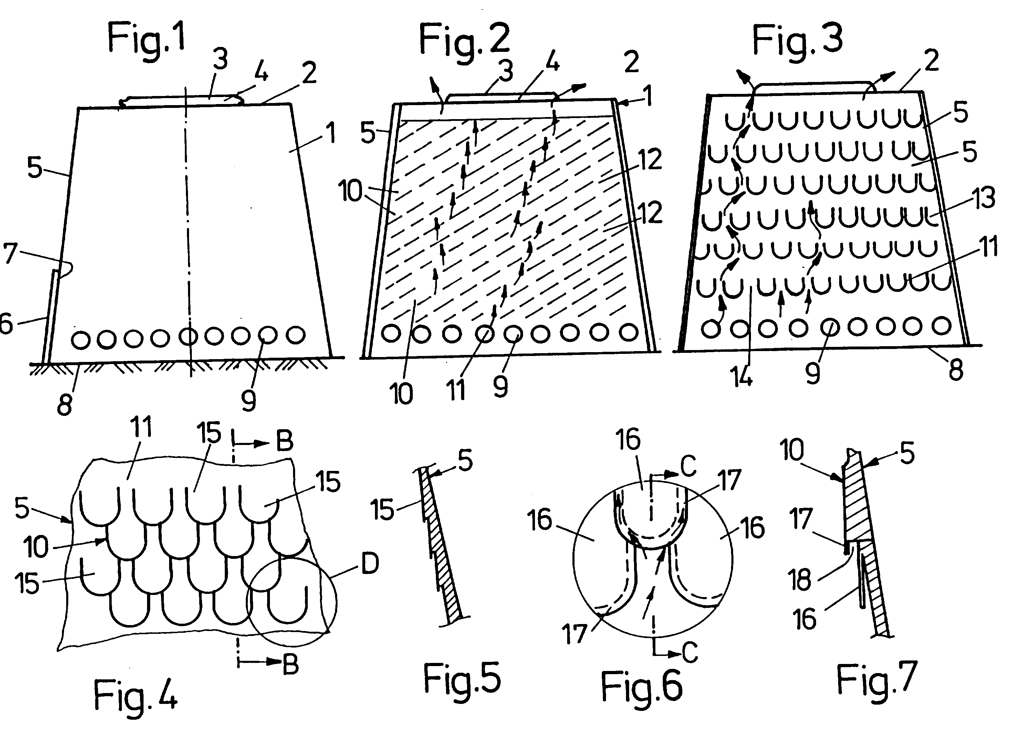

Nachstehend wird die Erfindung anhand von in den Zeichnungen dargestellten Ausführungsbeispielen von Kompostbehältern näher erläutert. In den Zeichnungen zeigen: Fig.1 eine Seitenansicht eines Kompostbehälters, Fig.2 einen Schnitt durch eine erste Ausführungsform eines Kompostbehälters, mit einem, die Luftströmung bremsenden Strömungslabyrinth an der Innenseite seiner Seitenwände, Fig.3 einen Schnitt durch einen Kompostbehälter mit einer weiteren Ausführungsform des Strömungslabyrinthes an der Innenseite seiner Seitenwände, Fig.4 eine Ansicht eines Ausschnittes einer Behälterseitenwand mit einer weiteren Ausführungsform des Strömungslabyrinthes, Fig.5 einen Schnitt nach der Linie B-B in Fig.4, Fig.6 das Detail D der Fig.4 in vergrößerter Darstellung, und Fig.7 einen Schnitt nach der Linie C-C in Fig.6.

Die erfindungsgemäße Vorrichtung zur Herstellung von Kompost weist einen, nach unten offenen, im Grundriß quadratischen oder kreisförmigen Behälter 1 auf, der sich nach oben verjüngt und am oberen Ende eine horizontale Decke 2 mit einer, durch einen Deckel 3 verschließbaren Einfüllöffnung 4 für das zu kompostierende Gut und in seiner Seitenwand 5 eine untere, durch eine Klappe 6 verschließbare Entnahmeöffnung 7 für den Kompost besitzt. In der Behälterwand 5 sind nahe ihres unteren Randes 8 mehrere, entlang dieses Randes verteilt angeordnete, die Behälterwand 5 durchsetzende, runde oder ovale Belüftungsöffnungen 9 vorgesehen.

An der Innenseite der Behälterwand 5 sind Luftleitelemente 10 vorgesehen, die ein die Luftströmung bremsendes Strömungslabyrinth für die durch die Belüftungsöffnungen 9 eintretende und an der Innenseite der Behälterwand 5 entlangstreichende Zuluft bilden.

Die Luftleitelemente 10 sind im Abstand von einander, in übereinanderliegenden, horizontalen oder schrägen Reihen angeordnet, wobei jeweils zwischen zwei einander benachbarten Luftleitelementen 10 einer Reihe ein kurzer, im wesentlichen vertikal verlaufender, seitlich von den Luftleitelementen 10 begrenzter Strömungskanal 11 ausgebildet ist, bei dem oberhalb seines oberen Endes ein Luftleitelement 10 der nächsten Reihe angeordnet ist, welches als Prallkörper für die im Strömungskanal 11 nach oben strömende Luft wirkt.

Beim Ausführungsbeispiel der Fig.2 sind die Luftleitelemente 10 als von der Behälterwand 5 nach innen abstehende, schräg zur Horizontalen verlaufende kurze, längliche Rippen 12 ausgebildet, welche in jeder der übereinander angeordneten Reihen jeweils gegenüber den Rippen 12 der benachbarten Reihen auf Lücke versetzt angeordnet sind. Die Anordnung der Rippen 12 ist in Fig.2 nur schematisch dargestellt. Die Länge, Breite und Höhe der Rippen 12 sowie die Abstände zwischen den einzelnen Rippen 12 einer Reihe und auch die Abstände der Reihen untereinander bestimmen die Größe und den Verlauf der kurzen Strömungskanäle 11 in den einzelnen Reihen. Durch die geeignete Auswahl dieser Abmessungen kann die jeweils gewünschte Bremswirkung des Strömungslabyrinth bestimmt werden.

Beim Ausführungsbeispiel der Fig.3 sind die Luftleitelemente 10 als von der Behälterwand 5 nach innen abstehende, schuppenartige Erhebungen 13 ausgebildet, die dachziegelartig in übereinanderliegenden Reihen angeordnet sind. Jeweils zwei einander benachbarte Erhebungen 13 begrenzen einen, im wesentlichen vertikal verlaufenden Strömungskanal 14, oberhalb dessen oberem Ende eine Erhebung 13 der nächsten Reihe als Prallkörper für die den Strömungskanal 14 durchströmende Luft vorgesehen ist.

Die Fig.4 bis 6 zeigen ein die Luftströmung entlang der Innenseite der Behälterwand 5 bremsendes Strömungslabyrinth, bei dem die Luftleitelemente 10 als von der Behälterwand 5 nach innen abstehende, schuppenartige Erhebungen 15 ausgebildet sind, die an ihrer, ins Behälterinnere weisenden Oberseite jeweils eine, angeformte, über die Seitenränder der jeweiligen Erhebung 15 seitlich überstehende, schuppenartig geformte Platte 16 besitzen. Diese angeformte Platte 16 bildet mit ihren über die seitliche Begrenzung der Erhebung 15 seitlich vorstehenden Randbereichen 17 zusammen mit dieser seitlichen Begrenzung einen hinterschnittenen Strömungskanal 18 entlang der seitlichen Begrenzung der Erhebung 15. Die mit den seitlich überstehenden Platten 16 versehenen Erhebungen 15 sind in einander überlappenden Reihen auf Lücke versetzt angeordnet, sodaß jeweils der von zwei benachbarten Erhebungen 15 begrenzte Strömungskanal 11 einer Reihe nach oben direkt in die Unterseite des hinterschnittenen Strömungskanales 18 mündet, der entlang der seitlichen Begrenzung der auf Lücke versetzten Erhebung 15 der darüberliegenden Reihe verläuft.

Bei der Ausführungsform des die Luftströmung bremsenden Strömungslabyrinthes gemäß den Fig.4 bis 7 stellt die teilweise Überdachung der Strömungskanäle 11,18 einen sicherer Schutz dieser Strömungskanäle gegen ein Verlegen durch Kleinteile des Kompostierungsgutes dar, auch wenn das Kompostierungsgut während des Kompostierungsprozesses im Behälter 1 von oben nach unten nachsinkt. Durch die teilweise Überdachung der Strömungskanäle bzw. durch die, gegenüber schmalen Stegen relativ breite Ausgestaltung der schuppenartigen Erhebungen wird das Nachsinken des Kompostierungsgut und dessen Verdichtung während Kompostierungsprozesses im unteren Teil des Behälters 1 erleichtert.

Das erfindungsgemäße, die Luftströmung bremsende Strömungslabyrinth kann nicht nur, wie in den oben beschriebenen Ausführungsbeispielen, von den mit der jeweiligen Behälterwand einstückigen Rippen, Erhebungen oder Vorsprüngen gebildet werden, sondern gemäß einem weiteren Ausführungsbeispiel der Erfindung auch von einer, an der glatten Innenfläche einer Behälterwand anliegenden und an dieser befestigten Innenschale gebildet werden, welche an der glatten Innenwand der Behälterwand anliegende, das Strömungslabyrinth bildende Strömungskörper enthält. Bei dieser Ausführungsform der Kompostiervorrichtung besteht der Behälter aus einer, in einem ersten Fertigungsgang hergestellten, dünnwandigen, äußeren Kunststoffschale mit glatter Innenwand und aus einer, in einem zweiten Fertigungsgang hergestellten, dünnwandigen Innenschale mit den entsprechend den oben dargestellten Ausführungsbeispielen ausgebildeten, in die Innenschale eingeformten rippenförmig, schuppenartig oder anders ausgebildeten Luftleitelementen. Diese Innenschale kann für alle Behälterwände einstückig oder als für jede Behälterwand getrennt ausgeführtes Innenwandelement ausgebildet sein. Das jeweilige hohle Innenwandelement wird mit dem äußeren Behälterwandteil bzw. mit der Außenschale des Behälters mittels Klebeverbindungen, oder Schnappverbindungen oder anderer formschlüssiger Verbindungsmittel verbunden. Auf diese Weise entstehen, aus dünnwandigen, preiswert herzustellenden Wandelementen zusammengesetzte, formstabile Sandwichelemente als Behälterwände, welche aufgrund der Doppelwandigkeit auch eine hervorragende Wärmeisolation aufweisen.

## Patentansprüche

1. Vorrichtung zur Herstellung von Kompost mit einem, vorzugsweise sich nach oben verjüngenden, an seiner Oberseite entlüftbaren Behälter mit einer oberen, vorzugsweise durch einen Deckel verschließbaren Einfüllöffnung für das zu kompostierende Gut, einer unteren, vorzugsweise durch eine Klappe verschließbaren Entnahmeöffnung für den Kompost, mehreren unteren, die Behälterwand durchsetzenden Belüftungsöffnungen sowie mit mehreren, an der Innenseite der Behälterwand angeordneten Luftleitelementen für die durch die Belüftungsöffnungen eintretende und an der Innenseite der Behälterwand entlangstreichende Zuluft, dadurch gekennzeichnet, daß an der Innenseite der Behälterwand (5) ein von den Luftleitelementen (10, 12,13,15) gebildetes, die Luftströmung entlang der Behälterwand (5) bremsendes Strömungslabyrinth vorgesehen ist.

2. Vorrichtung nach Anspruch 1, dadurch gekennzeichnet, daß die Luftleitelemente (10,12,13,15) in übereinanderliegenden Reihen angeordnet sind, wobei jeweils oberhalb eines, zwischen zwei einander benachbarten Luftleitelementen (10,12,13, 15) einer Reihe ausgebildeten kurzen Strömungskanales (11,18) ein Luftleitelement (10, 12, 13, 15) der nächsten Reihe als Prallkörper angeordnet ist.

3. Vorrichtung nach Anspruch 2, dadurch gekennzeichnet, daß von der Innenseite der Behälterwand (5) ins Innere des Behälters (1) vorspringende Erhebungen (12,13,15) und/oder an der Innenseite der Behälterwand (5) anliegende Strömungskörper als das Strömungslabyrinth bildende Luftleitelemente vorgesehen sind.

4. Vorrichtung nach Anspruch 2, dadurch gekennzeichnet, daß die Luftleitelemente als, vorzugsweise in horizontalen Reihen angeordnete schuppenartige Erhebungen (13,15) ausgebildet sind.

5. Vorrichtung nach Anspruch 2, dadurch gekennzeichnet, daß die Luftleitelemente als in schrägen und/oder horizontalen Reihen angeordnete, kurze, längliche Rippen (12) ausgebildet sind.

6. Vorrichtung nach einem der Ansprüche 2 bis 5, dadurch gekennzeichnet, daß die von der Innenseite der Behälterwand (5) ins Innere des Behälters (1) vorspringenden Erhebungen (12, 13,15) mit die sie begrenzenden Strömungskanäle (11,18) zumindest teilweise überdachenden Rändern versehen sind.

## Claims

1. Device for producing compost, with a preferably upwardly tapering container that is arranged to be ventilated at its top side and has an upper filling opening for the material to be composted, which opening is preferably closeable by means of a cover, a lower removal opening for the compost, which opening is preferably closeable by a flap, several lower ventilation openings through the container wall and also several air-deflecting elements arranged on the inside of the container wall for the incoming air entering through the ventilation openings and flowing along the inside of the container wall, characterised in that a flow labyrinth formed by the air-deflecting elements (10, 12, 13, 14) and decelerating the flow of air along the container wall (5) is provided on the inside of the container wall (5).

2. Device according to Claim 1, characterised in that the air-deflecting elements (10, 12, 13, 15) are arranged in superimposed rows, wherein above each short flow channel (11, 18) created between two adjacent air-deflecting elements (10, 12, 13, 15) of a row there is arranged a respective air-deflecting element (10, 12, 13, 15) of the next row as deflector member.

3. Device according to Claim 2, characterised in that raised portions (12, 13, 15) projecting from the inside of the container wall (5) into the interior of the container (1) and/or flow members lying on the inside of the container wall (5) are provided as air-deflecting elements forming the flow labyrinth.

4. Device according to Claim 2, characterised in that the air-deflecting elements are in the form of scale-like raised portions (13, 15) arranged preferably in horizontal rows.

5. Device according to Claim 2, characterised in that the air-deflecting elements are in the form of short, elongate ribs (12) arranged in oblique and/or horizontal rows.

6. Device according to any one of Claims 2 to 5, characterised in that the raised portions (12, 13, 15) projecting from the inside of the container wall (5) into the interior of the container (1) are provided with edges at least partly overlapping the flow channels (11, 18) defining them.

## Revendications

1. Dispositif pour fabriquer du compost, comprenant un récipient, allant de préférence en se rétrécissant vers le haut, permettant la sortie d'air en son côté supérieur, ce récipient comprenant une ouverture de remplissage supérieure pour la matière à transformer en compost, pouvant de préférence être fermée par un couvercle, une ouverture de prélèvement inférieure pour le compost, pouvant de préférence être fermée par une trappe, plusieurs ouvertures d'aération inférieures traversant la paroi du récipient, ainsi que plusieurs éléments de guidage de l'air disposés sur le côté intérieur de la paroi du récipient pour l'air amené, pénétrant par les ouvertures d'aération et léchant le côté intérieur de la paroi du récipient, caractérisé en ce qu'il est prévu sur le côté intérieur de la paroi du récipient (5) un labyrinthe d'écoulement constitué par les éléments de guidage d'air (10, 12, 13, 15) et qui freine l'écoulement de l'air le long de la paroi du récipient (5).

2. Dispositif selon la revendication 1, caractérisé en ce que les éléments de guidage d'air (10, 12, 13, 15) sont disposés en rangées superposées, tandis qu'au-dessus de chaque court canal d'écoulement (11, 18) constitué entre deux éléments de guidage d'air voisins (10, 12, 13, 15) d'une rangée, un élément de guidage d'air (10, 12, 13, 15) de la rangée suivante est agencé en corps formant chicane.

3. Dispositif selon la revendication 2, caractérisé en ce que des bossages (12, 13, 15) faisant saillie du côté intérieur de la paroi du récipient (5) vers l'intérieur du récipient (1), et/ou des corps modificateurs d'écoulement adjacents au côté intérieur de la paroi du récipient (5) sont prévus en tant qu'éléments de guidage d'air constituant le labyrinthe d'écoulement.

4. Dispositif selon la revendication 2, caractérisé en ce que les éléments de guidage d'air sont réalisés sous la forme de bossages (13, 15) du genre écailles disposées de préférence en rangées horizontales.

5. Dispositif selon la revendication 2, caractérisé en ce que les éléments de guidage d'air sont réalisés sous la forme de courtes nervures allongées (12) disposées en rangée obliques et/ou horizontales.

6. Dispositif selon l'une des revendications 2 à 5, caractérisé en ce que les bossages (12, 13, 15) faisant saillie du côté intérieur de la paroi du récipient (5) vers l'intérieur du récipient (1) sont munis de bords qui recouvrent au moins partiellement les canaux d'écoulement (11, 18) qui les délimitent.
